(19) Europäisches Patentamt
European Patent Office
Office européen des brevets

(11) **EP 4 443 389 A1**

(12) **EUROPEAN PATENT APPLICATION**

(43) Date of publication:
**09.10.2024 Bulletin 2024/41**

(21) Application number: **23166387.3**

(22) Date of filing: **03.04.2023**

(51) International Patent Classification (IPC):
***G06T 11/60*** $^{(2006.01)}$

(52) Cooperative Patent Classification (CPC):
**G06T 11/60;** G06T 2207/20081; G06T 2207/20084

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Robert Bosch GmbH**
**70442 Stuttgart (DE)**

(72) Inventors:
• **Kister, Nikita**
**72074 Tübingen (DE)**
• **Khoreva, Anna**
**70197 Stuttgart (DE)**

(54) **TRAINING A DIFFUSION MODEL FOR A PARTICULAR EQUIVARIANCE**

(57)     A method (100) for training a diffusion model (1) that is configured to generate, from an input image *i* comprising at least a noise sample $\varepsilon$, a de-noised output image *o,* the method (100) comprising the steps of:
• providing (110) training samples $\varepsilon$ of noise;
• providing (120) training images *x\**;
• providing (130) at least one transform *T* with respect to which the diffusion model (1) shall be equivariant, said transform *T* mapping an image *I* to a transformed image *T(I)*;
• applying (140) each noise sample $\varepsilon$ to one or more training images *x\**, thereby obtaining a noisy image $x_t$;
• applying (150) the transform *T* to the noisy image $x_t$, and/or to the noise sample $\varepsilon$ before forming the noisy image $x_t$, thereby obtaining an input $i = T(x_t)$ for the to-be-trained diffusion model (1);
• generating (160), by the to-be-trained diffusion model (1), from the input i, an output o;
• computing (170), based at least on the transform *T* and the noise sample $\varepsilon$, an expected output $o^{\#}$;
• rating (180), by means of a predetermined loss function *L,* a deviation of the output *o* from the expected output $o^{\#}$; and
• optimizing (190) parameters (1a) that characterize the behavior of the diffusion model (1) towards the goal that, when further training samples $\varepsilon$ of noise are processed, the value of the loss function *L* improves.

Fig. 1

EP 4 443 389 A1

## Description

The present invention relates to diffusion models that process noisy inputs into realistic images.

Background

For the supervised training of image classifiers, a large number of training images that are labelled with "ground truth" is required. The labelling of training images is often a manual process and therefore expensive. Also, for some situations, there are just too few training images. For example, for training a classifier that processes traffic situations, it is difficult to safely stage near-hit situations involving pedestrians.

Therefore, many data augmentation methods have been explored. Data augmentation generates, from a given image with known semantic content and thus a known "ground truth" label, a modified image with substantially the same content, so that the existing "ground truth" label remains valid for the modified image.

Recently, image generators based on diffusion models have emerged. Such diffusion models take in a noisy input and de-noise it in multiple stages to generate a realistic image. While the input can be a realistic image to which noise has been added, so as to give the diffusion model some guidance, control over the semantic content of the final output is still limited.

Disclosure of the invention

The invention provides a method for training a diffusion model. This diffusion model is configured to generate, from an input image $i$ comprising at least a noise sample $\varepsilon$, a de-noised output image $o$. In particular, the input image $i$ may consist of just the noise sample $\varepsilon$. But the input image $i$ may also, for example, be a superposition (such as an additive superposition) of an arbitrary image and the noise sample $\varepsilon$. In particular, such a superposition may be performed in a Markov chain of several stages that progressively obliterate the information in the arbitrary image.

In the course of the method, training samples $\varepsilon$ of noise are provided. For example, these noise samples $\varepsilon$ may be drawn randomly from a given distribution. Also, training images $x^*$ are provided.

It is an objective of the training to make the diffusion model equivariant with respect to at least one transform $T$. Therefore, such a transform $T$ is provided. The transform $T$ takes in an image $I$ and maps this to a transformed image Equivariance of the diffusion model with respect to this transform $T$ means that if the transform $T$ is applied to the input $i$ of the diffusion model, the change that this causes in the output $o$ of the diffusion model is predictable.

To move the training of the diffusion model in this direction, each noise sample $\varepsilon$ is applied to one or more training images $x^*$, thereby obtaining a noisy image

$x_t$. As discussed before, this may happen gradually in several stages.

The transform $T$ is then applied to the noisy image $x_t$. This produces an input $i = T(x_t)$ for the to-be-trained diffusion model. From this input, the to-be-trained diffusion model generates an output $o$. Like the addition of noise $\varepsilon$, this de-noising may also be performed in a Markov chain of several stages. Alternatively or in combination to this, the transform $T$ may also be applied to the noise sample $\varepsilon$ before this is applied to the training image $x^*$ to form the noisy image $x_t$. For simplicity, the result of the transform will be regarded as a transformation $T(x_t)$ of the noisy image $x_t$ in both cases.

Based on the transform $T$ and the noise sample $\varepsilon$, an expected output $o^{\#}$ of the to be-trained diffusion model is computed. This expected output $o^{\#}$ represents the predictable change that applying the transform $T$ to the input $i$ of the to-be-trained diffusion model shall cause on the output $o$ of this diffusion model.

A deviation of the output $o$ from the expected output $o^{\#}$ is rated by means of a predetermined loss function $L$. Parameters that characterize the behavior of the to-be-trained diffusion model are optimized towards the goal that, when further training samples $\varepsilon$ of noise are processed, the value of the loss function $L$ improves.

In this manner, the diffusion model is trained towards the objective that applying the transform $T$ to its input $i$ causes a predictable change to its output $o$. This in turn allows to make, using a suitable transform $T$, deliberate edits to the input $i$ in order to cause a desired change to the output $o$. In this respect, the space of inputs $i$ can be regarded as a latent space that is suitable for making edits, somewhat similar to the feature maps that a convolutional neural network produces from the image. The main difference is that the present latent space is pixel-aligned with the space of output images $o$. In particular, the diffusion model may be trained to be equivariant with respect to multiple transforms $T$ that form a "toolbox" for making desired changes to the output image $o$.

The pixel-aligned latent variable $i$ has the potential to enable fine grained image control by allowing to re-sample specific regions in a given image. Through the equivariance with respects to edits using certain transform $T$, it can be, for example, enforced that re-sampling the latent variable $i$ locally should lead to local changes in appearance in the output $o$. Similarly, moving local segments corresponding to specific objects around should preserve the appearance of the object while changing its location.

In a particularly advantageous embodiment, the loss function $L$ also measures a deviation of the output $o$ from the noise sample $\varepsilon$. Predicting the noise sample $\varepsilon$ is the standard objective for training a diffusion model. In combination with this, the newly introduced objective of equivariance becomes a regularization term. That is, if no transform $T$ is applied to the input $i$, the diffusion model behaves exactly in the standard manner after training, but on top of this, but if a transform $T$ is applied, then the output o is what is to be expected given the nature of the transform $T$.

In the loss function $L$, both goals may be weighted relative to each other in any suitable manner. In particular, during the training, the weighting between

• a deviation of the output o from the expected output $o^{\#}$ on the one hand and
• a deviation of the output o from the noise sample $\varepsilon$ on the other hand may be varied according to an annealing schedule. In this manner, convergence towards both objectives may be facilitated.

In one example, the annealing schedule comprises gradually shifting weight towards the deviation of the output o from the expected output $o^{\#}$. That is, at the beginning of the training, it is more important that the behavior of the diffusion model conforms to the standard behavior, namely accurately predicting the noise sample $\varepsilon$. Once training has progressed in this respect, the objective of equivariance may be gradually introduced.

In a particularly advantageous embodiment, the transform $T$ is applied to the noise sample $\varepsilon$, thereby obtaining a transformed noise sample $T(\varepsilon)$ as the expected output $o^{\#}$. In this manner, the diffusion network is trained towards the equivariance that modifying the input i by the transform $T$ causes a corresponding modification of the output o.

Examples of transforms $T$ that may be used for targeted image edits include:

• horizontally or vertically flipping the to-be-transformed image $I$;
• rotating the to-be-transformed image $I$;
• scaling the to-be-transformed image $I$; and
• selectively applying at least one editing step to a particular region of interest in the to-be-transformed image $I$.

In particular, for the latter, the pixel alignment between the input i and the output o of the diffusion model is advantageous.

In a further particularly advantageous embodiment, the editing step that is to be applied selectively comprises one or more of:

• moving the content of the region of interest to another location in the to-be-transformed image $I$; and
• applying an optical flow field to the region of interest.

These editing steps are most useful for generating variants of images that still have the same semantic content, which means that a "ground truth" label assigned to the original image is still valid for the new image. For example, if the content of a region that corresponds to an object is moved to another location in the image, then the image still contains the same object. Also, by applying an optical flow field to a region that corresponds to an object, the appearance of an object (such as a face) may change, but the object will still remain the same. In particular, applying an optical flow field can serve to change the apparent pose of a person in the image. Without a training for equivariance, if an input image of a face is superimposed with noise $\varepsilon$ and the region corresponding to the face is translated to a different position (or distorted by applying an optical flow field) to form an input i for a diffusion model trained on a face dataset, the output o of the diffusion model might show a completely different face.

Therefore, the invention also provides a method for editing at least one image $X$.

In the course of this method, a trained diffusion model is provided, together with a transform $T$ that maps an image $I$ to a transformed image $T(I)$. This trained diffusion model is equivariant with respect to the transform $T$. In particular, the trained diffusion model can be one that has been trained according to the method described above.

A noise sample $\varepsilon$ is randomly drawn from a given distribution. This noise sample is applied to the image $X$, thereby obtaining a noisy image $X_t$.

The transform $T$ is applied to the noisy image $X_t$. This produces an input i for the trained diffusion model. Alternatively or in combination to this, the transform $T$ may also be applied to the noise sample $\varepsilon$ before this is applied to the image $X$ to form the noisy image $X_t$. For simplicity, the result of the transform will be regarded as a transformation $T(x_t)$ of the noisy image $x_t$ in both cases, and used as input i for the trained diffusion model.

From this input i, the trained diffusion model generates an output o as the result of the editing.

As discussed before, applying a transform $T$ with respect to which the trained diffusion model has a known equivariance causes the editing to have a controllable effect on the semantic content of the image $X$. In particular, the transform $T$ may be chosen to leave the semantic content of the image $X$ unchanged, or to apply a well-defined change to this semantic content.

In a particularly advantageous embodiment, the noise sample $\varepsilon$ is applied to the image $X$ at most with a strength that still, according to a given criterion, leaves given content recognizable in the noisy image $X_t$. In this manner, the diffusion network is encouraged to preserve more of the semantic content of the original image $X$.

In a further particularly advantageous embodiment, the image $X$ comprises a road traffic situation, and the transform $T$ comprises a rearrangement of at least one object in the road traffic situation. In this manner, realistic-looking images of road traffic situations that only occur rarely, and/or are too difficult or too dangerous to stage, may be created. For example, a pedestrian that, in the original image $X$, is properly walking on the sidewalk of the road may, by applying the transform $T$ to the noisy image $X_t$, be moved in front of an approaching vehicle. This is a very dangerous situation that cannot be staged in public road traffic. Nonetheless, training images of such situations are needed for the training of image classifiers for road traffic situations, so that the trained image classifier is able to recognize them correctly.

In a further advantageous embodiment, the image $X$ is taken from a sequence of images that comprises motion of at least one object between images. he transform $T$ comprises applying this motion to the noisy image $X_t$ or a part thereof. In this manner, a motion extracted from the sequence of images may be transferred to the output image $o$ generated from the image $X$ while otherwise leaving the semantic content of the image $X$ intact. For example, a sequence of output images $o$ may be generated that shows different or modified objects moving in the same manner as in the original image $X$. This sequence will then be time-consistent. That is, changes between one frame and the next frame of the sequence will be explainable by the motion, but there will be no sudden and unexpected changes, such as one object suddenly being replaced by another object.

As discussed before, it is an advantage of image editing with transforms $T$ in a latent space that there is better control over whether, and how, the semantic content of the image is changed. If the original image X is labelled with a ground truth label with respect to the training of a neural network, the known equivariance then allows to determine a ground truth label for the output image $o$. Therefore, in a further particularly advantageous embodiment, the method further comprises:

- determining, from a ground truth label $G_X$ already known for the image $X$ and the transform $T$, a ground truth label $G_o$ for the output $o$ with respect to a task of a to-be-trained neural network; and
- training the to-be-trained neural network in a supervised manner using the output $o$ and the ground truth label $G_o$.

In particular, the to-be-trained neural network may be an image classifier. The power of such an image classifier to generalize to unseen situations depends on a sufficient variability in the dataset of training images.

The methods may be wholly or partially computer-implemented and embodied in software. The invention therefore also relates to a computer program with machine-readable instructions that, when executed by one or more computers and/or compute instances, cause the one or more computers and/or compute instances to perform a method. Herein, control units for vehicles or robots and other embedded systems that are able to execute machine-readable instructions are to be regarded as computers as well. Compute instances comprise virtual machines, containers or other execution environments that permit execution of machine-readable instructions in a cloud.

A non-transitory storage medium, and/or a download product, may comprise the computer program. A download product is an electronic product that may be sold online and transferred over a network for immediate fulfilment. One or more computers and/or compute instances may be equipped with said computer program, and/or with said non-transitory storage medium and/or download product.

In the following, the invention will be described using Figures without any intention to limit the scope of the invention.

Description of the Figures

The Figures show:

Figure 1 Exemplary embodiment of the method 100 for training a diffusion model 1 that is configured to generate, from an input image $i$ comprising at least a noise sample $\varepsilon$, a de-noised output image $o$;

Figure 2 Exemplary embodiment of the method 200 for editing at least one image $X$;

Figure 3- Exemplary illustration of the effect of the method 200 for a transform $T$ that flips the noise sample $\varepsilon$;

Figure 4 Exemplary illustration of the effect of the method 200 for a transform $T$ that moves a latent image region.

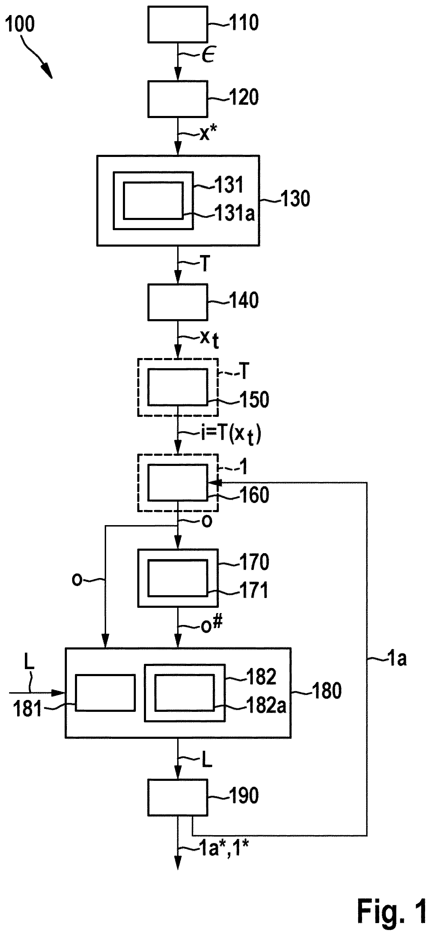

Figure 1 is a schematic flow chart of an embodiment of the method 100 for training a diffusion model 1. The diffusion model 1 is configured to generate, from an input image $i$ comprising at least a noise sample $\varepsilon$, a de-noised output image $o$.

In step 110, training samples $\varepsilon$ of noise are provided.

In step 120, training images $x^*$ are provided.

In step 130, at least one transform $T$ that maps an image $I$ to a transformed image $T(I)$ is provided. It is an objective of the training to make the diffusion model 1 equivariant with respect to this transform $T$.

According to block 131, the transform $T$ may comprise one or more of:

- horizontally or vertically flipping the to-be-transformed image $I$;
- rotating the to-be-transformed image $I$;
- scaling the to-be-transformed image $I$; and
- selectively applying at least one editing step to a particular region of interest in the to-be-transformed image $I$.

According to block 131a, the editing step may comprise one or more of:

- moving the content of the region of interest to another location in the to-be-transformed image $I$; and
- applying an optical flow field to the region of interest.

In step 140, each noise sample $\varepsilon$ to one or more training images $x^*$. Every time this is done, a noisy image $x_t$ is produced.

In step 150, the transform T to the noisy image $x_t$. This produces an input $i = T(x_t)$ for the to-be-trained diffusion model 1. Alternatively or in combination to this, the transform $T$ may also be applied to the noise sample $\varepsilon$ before this is applied to the training image $x^*$ to form the noisy image $x_t$. For simplicity, the result of the transform will be regarded as a transformation $T(x_t)$ of the noisy image $x_t$ in both cases.

In step 160, the to-be-trained diffusion model generates an output $o$ from the input $i$.

In step 170, based at least on the transform $T$ and the noise sample $\varepsilon$, an expected output $o^{\#}$ is computed.

According to block 171, the expected output $o^{\#}$ may be determined by applying the transform $T$ to the noise sample $\varepsilon$.

In step 180, a deviation of the output $o$ from the expected output $o^{\#}$ is rated by means of a predetermined loss function L.

According to block 181, the loss function $L$ may also measure a deviation of the output $o$ from the noise sample $\varepsilon$ as the standard loss for a diffusion model 1.

According to block 182, in the loss function $L$, the weighting between

- a deviation of the output $o$ from the expected output $o^{\#}$ on the one hand and
- a deviation of the output $o$ from the noise sample $\varepsilon$ on the other hand may be varied according to annealing schedule.

In step 190, parameters 1a that characterize the behavior of the diffusion model 1 are optimized towards the goal that, when further training samples $\varepsilon$ of noise are processed, the value of the loss function $L$ improves. The optimized state of the parameters 1a is labelled with the reference sign 1a*. The optimized parameters 1a* define the trained state 1* of the diffusion model 1.

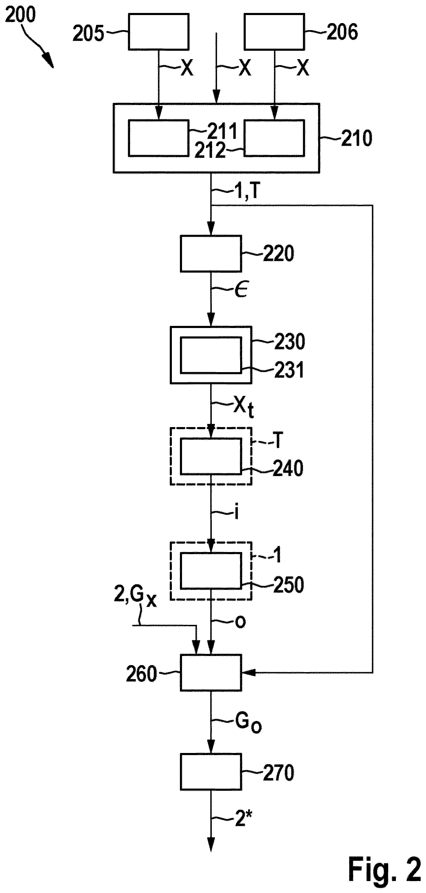

Figure 2 is a schematic flow chart of an embodiment of the method 200 for editing at least one image $X$.

In step 210, a trained diffusion model 1 and a transform $T$ are provided. The transform $T$ maps an image $I$ to a transformed image $T(I)$. The trained diffusion model 1 is equivariant with respect to the transform $T$.

According to block 205, the image $X$ may comprise a road traffic situation. According to block 211, the transform $T$ may then comprise a rearrangement of at least one object in the road traffic situation.

According to block 206, the image $X$ may be taken from a sequence of images that comprises motion of at least one object between images. According to block 212, the transform $T$ may then comprise applying this motion to the noisy image $X_t$ or a part thereof.

In step 220, a noise sample $\varepsilon$ is randomly drawn from a given distribution.

In step 230, the noise sample $\varepsilon$ is applied to the image $X$, thereby obtaining a noisy image $X_t$.

According to block 231, the noise sample $\varepsilon$ may be applied to the image $X$ at most with a strength that still, according to a given criterion, leaves given content recognizable in the noisy image $X_t$.

In step 240, the transform $T$ is applied to the noisy image $X_t$. This produces an input $i$ for the trained diffusion model 1. Alternatively or in combination to this, the transform $T$ may also be applied to the noise sample $\varepsilon$ before this is applied to the image $X$ to form the noisy image $X_t$.

In step 250, the trained diffusion model 1 produces an output $o$ from the input $i$ as a result of the editing.

In step 260, from a ground truth label $G_X$ already known for the image $X$ and the transform $T$, a ground truth label $G_o$ for the output $o$ with respect to a task of a to-be-trained neural network 2 is determined.

In step 270, the to-be-trained neural network 2 is trained in a supervised manner using the output $o$ and the ground truth label $G_o$. The trained state of the neural network 2 is labelled with the reference sign 2*.

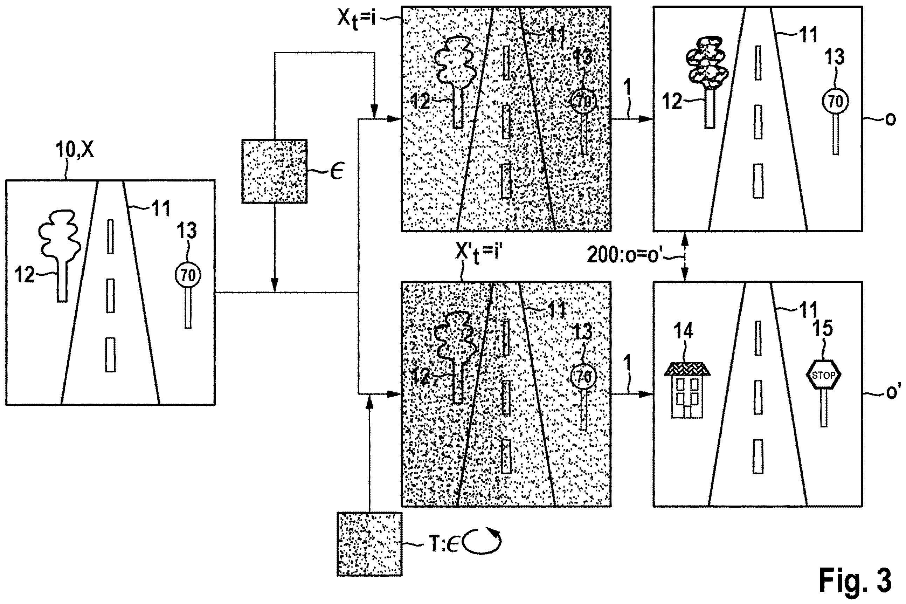

Figure 3 shows the effect that the method 200 has in an application where the transform $T$ flips the noise sample $\varepsilon$.

The to-be-edited image $X$ is an image of a road traffic situation 10. The road traffic situation 10 comprises a road 11, a tree 12, and a 70 km/h speed limit sign 13.

In the example shown in Figure 3, the noise sample $\varepsilon$ has a higher density on its left-hand side than on its right-hand side. Applying this noise sample $\varepsilon$ as it is to the image X results in a noisy image $X_t$ as input $i$ for the diffusion model 1.

When this noisy image $X_t$ is processed by the diffusion model 1, an output image $o$ results. In the example shown in Figure 3, in the output image $o$, the appearance of the tree 12 has changed compared to the original image $X$, but it is still a tree.

The transform $T$ flips the noise sample $\varepsilon$ horizontally. When this modified noise sample is applied to the original image $X$, a noisy image $X'_t$ results and becomes another input $i'$ for the diffusion model 1.

If the diffusion model 1 is not, as required in the method 200, equivariant with respect to the transform $T$, then the output $o'$ that the diffusion model 1 produces from the input $i'$ will be very different from the output $o$ produced from the input $i$. In the example shown in Figure 3, the tree 12 has mutated to a house 14, and the speed limit sign 13 has mutated to a stop sign 15.

By contrast, if the diffusion model 1 possesses said equivariance as required in the method 200 (and providable, e.g., by the training according to the method 100), then said drastic semantic changes in the output image $o'$ are avoided.

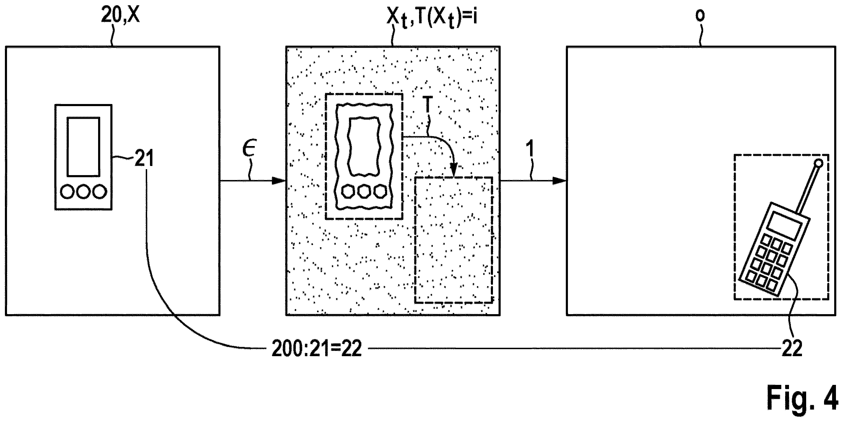

Figure 4 shows the effect of the method for a transform $T$ that moves a latent image region in the noisy

image $X_t$. That is, in contrast to the example shown in Figure 3, the transform $T$ is now acting in latent space on the noisy image $X_t$, rather than on the noise sample $\varepsilon$ that is used to proceed from the space of original images $X$ into the latent space.

In the example shown in Figure 4, the to-be-edited image $X$ is a photograph 20 of a smartphone 21. By applying the noise sample $\varepsilon$ to this image $X$, a noisy image $X_t$ is formed. The transform $T$ moves content from the area where the smartphone 21 is visible in the original image X into a same-sized area in the lower right corner of the noisy image $X_t$. The noise in the remaining areas is not altered, and the hole that results at the original location of the content is filled with random noise. The transformed image $T(X_t)$ formed in this manner is the input $i$ for the diffusion model 1.

If the diffusion model 1 is not, as required in the method 200, equivariant with respect to the transform $T$, then, in the output image $o$, not only the location of the smartphone 21 will change as intended. Rather, instead of a smartphone 21, the output image o will show a mobile phone 22 of the pre-smartphone generation. This is a significant semantic change.

By contrast, if the diffusion model 1 possesses said equivariance as required in the method 200 (and providable, e.g., by the training according to the method 100), then said drastic semantic change in the output image $o$ is avoided.

**Claims**

1. A method (100) for training a diffusion model (1) that is configured to generate, from an input image $i$ comprising at least a noise sample $\varepsilon$, a de-noised output image o, the method (100) comprising the steps of:

   • providing (110) training samples $\varepsilon$ of noise;
   • providing (120) training images $x^*$;
   • providing (130) at least one transform $T$ with respect to which the diffusion model (1) shall be equivariant, said transform $T$ mapping an image $I$ to a transformed image $T(I)$;
   • applying (140) each noise sample $\varepsilon$ to one or more training images $x^*$, thereby obtaining a noisy image $x_t$;
   • applying (150) the transform $T$ to the noisy image $x_t$ and/or to the noise sample $\varepsilon$ before forming the noisy image $x_t$, thereby obtaining an input $i = T(x_t)$ for the to-be-trained diffusion model (1);
   • generating (160), by the to-be-trained diffusion model (1), from the input $i$, an output $o$;
   • computing (170), based at least on the transform $T$ and the noise sample $\varepsilon$, an expected output $o^{\#}$;
   • rating (180), by means of a predetermined loss function $L$, a deviation of the output $o$ from the expected output $o^{\#}$; and

   • optimizing (190) parameters (1a) that characterize the behavior of the diffusion model (1) towards the goal that, when further training samples $\varepsilon$ of noise are processed, the value of the loss function $L$ improves.

2. The method (100) of claim 1, further comprising: applying (171) the transform $T$ to the noise sample $\varepsilon$, thereby obtaining a transformed noise sample $T(\varepsilon)$ as the expected output $o^{\#}$.

3. The method (100) of any one of claims 1 to 2, wherein the transform $T$ comprises (131) one or more of:

   • horizontally or vertically flipping the to-be-transformed image $I$;
   • rotating the to-be-transformed image $I$;
   • scaling the to-be-transformed image $I$; and
   • selectively applying at least one editing step to a particular region of interest in the to-be-transformed image $I$.

4. The method (100) of claim 3, wherein the editing step comprises (131a) one or more of:

   • moving the content of the region of interest to another location in the to-be-transformed image $I$; and
   • applying an optical flow field to the region of interest.

5. The method (100) of any one of claims 1 to 4, wherein the loss function $L$ also measures (181) a deviation of the output $o$ from the noise sample $\varepsilon$.

6. The method (100) of claim 5, wherein, during the training, in the loss function $L$, the weighting between

   • a deviation of the output $o$ from the expected output $o^{\#}$ on the one hand and
   • a deviation of the output $o$ from the noise sample $\varepsilon$ on the other hand is varied (182) according to an annealing schedule.

7. The method (100) of claim 6, wherein the annealing schedule comprises (182a): gradually shifting weight towards the deviation of the output $o$ from the expected output $o^{\#}$.

8. A method (200) for editing at least one image $X$, comprising the steps of:

   • providing (210) a trained diffusion model (1) and a transform $T$ that maps an image $I$ to a transformed image $T(I)$, wherein the trained diffusion model (1) is equivariant with respect to the transform $T$;
   • randomly drawing (220) a noise sample $\varepsilon$ from

a given distribution;
- applying (230) the noise sample $\varepsilon$ to the image $X$, thereby obtaining a noisy image $X_t$;
- applying (240) the transform $T$ to the noisy image $X_t$ and/or to the noise sample $\varepsilon$ before forming the noisy image $X_t$, thereby obtaining an input $i$ for the trained diffusion model (1); and
- generating (250), by the diffusion model (1), from the input $i$, an output $o$ as the result of the editing.

9. The method (200) of claim 8, wherein the noise sample $\varepsilon$ is applied (231) to the image $X$ at most with a strength that still, according to a given criterion, leaves given content recognizable in the noisy image $X_t$.

10. The method (200) of any one of claims 8 to 9, wherein the image $X$ comprises (205) a road traffic situation, and the transform $T$ comprises (211) a rearrangement of at least one object in the road traffic situation.

11. The method (200) of any one of claims 8 to 10, wherein

- the image $X$ is taken (206) from a sequence of images that comprises motion of at least one object between images; and
- the transform $T$ comprises (212) applying this motion to the noisy image $X_t$ or a part thereof.

12. The method (200) of any one of claims 8 to 11, further comprising:

- determining (260), from a ground truth label $G_X$ already known for the image $X$ and the transform $T$, a ground truth label $G_o$ for the output $o$ with respect to a task of a to-be-trained neural network (2); and
- training (270) the to-be-trained neural network (2) in a supervised manner using the output $o$ and the ground truth label $G_o$.

13. A computer program, comprising machine-readable instructions that, when executed on one or more computers and/or compute instances, cause the one or more computers and/or compute instances to perform a method (100, 200) of any one of claims 1 to 12.

14. A non-transitory machine-readable data carrier and/or a download product with the computer program of claim 13.

15. One or more computers with the computer program of claim 13, and/or with the machine-readable data carrier and/or download product of claim 14.

Fig. 1

Fig. 2

Fig. 3

**Fig. 4**

Europäisches
Patentamt

European
Patent Office

Office européen
des brevets

# EUROPEAN SEARCH REPORT

Application Number

EP 23 16 6387

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EMIEL HOOGEBOOM ET AL: "Equivariant Diffusion for Molecule Generation in 3D", ARXIV.ORG, CORNELL UNIVERSITY LIBRARY, 201 OLIN LIBRARY CORNELL UNIVERSITY ITHACA, NY 14853, 16 June 2022 (2022-06-16), XP091248119, | 1-9, 12-15 | INV. G06T11/60 |
| A | * the whole document * | 10,11 | |
| A | US 2021/241102 A1 (KHOREVA ANNA [DE] ET AL) 5 August 2021 (2021-08-05) * paragraph [0148] - paragraph [0268] * | 1-15 | |
| A | FANGNENG ZHAN ET AL: "Multimodal Image Synthesis and Editing: A Survey", ARXIV.ORG, CORNELL UNIVERSITY LIBRARY, 201 OLIN LIBRARY CORNELL UNIVERSITY ITHACA, NY 14853, 24 July 2022 (2022-07-24), XP091278270, * sections 3.3 and 3.6 * | 1-15 | |

TECHNICAL FIELDS
SEARCHED    (IPC)

G06T

The present search report has been drawn up for all claims

| Place of search | Date of completion of the search | Examiner |
|---|---|---|
| Munich | 30 August 2023 | Rockinger, Oliver |

EPO FORM 1503 03.82 (P04C01)

## ANNEX TO THE EUROPEAN SEARCH REPORT
## ON EUROPEAN PATENT APPLICATION NO.

EP 23 16 6387

This annex lists the patent family members relating to the patent documents cited in  the above-mentioned European search report.
The members are as contained in the European Patent Office EDP file on
The European Patent Office is in no way liable for these particulars which are merely given for the purpose of information.

30-08-2023

| Patent document cited in search report | | Publication date | Patent family member(s) | | Publication date |
|---|---|---|---|---|---|
| US 2021241102 | A1 | 05-08-2021 | CN | 113283457 A | 20-08-2021 |
| | | | EP | 3859598 A1 | 04-08-2021 |
| | | | US | 2021241102 A1 | 05-08-2021 |

For more details about this annex : see Official Journal of the European Patent Office, No. 12/82

EPO FORM P0459